# EUROPEAN PATENT SPECIFICATION

(11) **EP 1 132 257 B1**
(45) Date of publication and mention of the grant of the patent: **05.10.2005**
(21) Application number: 01105329.5
(22) Date of filing: 07.03.2001
(51) Int. Cl.: B60R 7/02, B60R 7/08

(54) **A tilting hook for hanging up of baggage**
Schwenkbarer Haken zum Aufhängen von Gepäck
Crochet pivotant pour l'accrochage de bagages

(30) Priority: 08.03.2000 CZ 20000838
(43) Date of publication of application: 12.09.2001
(73) Proprietor: Skoda Auto a.s., 293 60 Mlada Boleslav (CZ)
(72) Inventor: Kraus, Ladislav, 512 36 (CZ)
(74) Representative: HOFFMANN EITLE

(56) References cited:
- EP-A- 0 830 986
- GB-A- 708 894
- US-A- 2 232 094
- US-A- 3 357 670
- US-A- 5 210 905
- US-A- 5 248 176
- US-A- 6 050 763

## Description

### Field of the Invention

The present invention relates to the design of a tilting hook for hanging up of baggage and shopping bags in the automobile interior, preferably in the baggage compartment, according to the preamble of claim 1. Such a tilting hook is for instance known from document EP-A-0 830 986.

### Background of the Invention

Up to now smaller pieces of baggage as well as shopping bags are deposited in the automobile interior on seats or floor, eventually on the rear plateau. The bigger and heavier pieces of baggage are deposited in the baggage space. However, during a drive all baggage pieces can relocate undesirably and overturn what by action of inertial forces. This is undesirable and uncomfortable, especially in case of full shopping bags in which case the small things usually fall out. To avoid the above mentioned undesirable movements the automobile interior spaces are usually provided with a fixed suspension hook or with a tilting suspension hook, which hook is placed in a casing, which casing is sunken in the internal side wall and the hook can be tilted out of the casing in one direction.

A disadvantage of such hooks is that they damage frequently, in case of the fixed hooks usually when big and heavy bags are hung up in the baggage compartment. The hooks that can tilt in one direction or the securing elements of such hooks usually brake when the hung up baggage and shopping bags are rapidly extracted incautiously and the hanging elements of the hooks point perpendicularly to the wall surface where the tilting hook is fixed in.

Accordingly, it is an object of this invention to overcome the problems of the prior art, particularly, to provide a tilting hook of improved design.

### Summary of the Invention

The above mentioned drawbacks are substantially removed by a tilting hook for hanging up of baggage and shopping bags in an automobile interior, preferably in a baggage compartment, comprising a base provided with a central longitudinal recess, whereby, a rotatable shaft runs along in said recess, which shaft is mounted in the edge parts of the base, which shaft carries the hook body and is provided with a friction brake and a spring, which spring is acting on the hook body in the direction to the resting rear non-functional position said central longitudinal recess of the base being formed such that the hook body is filtable from the resting rear non-functional position across a vertical functional position up to a front non-functional position.

Preferably, the tilting hook is provided with a controlling strap, which strap is fastened in a central part of the hook body and serves for tilting of the hook body into the vertical position, whereby, none of the positions is mechanically locked.

Also preferably, the base (2) is provided with recesses on external sides of the edge parts, which recesses are provided for placing of fixing elements for securing of a tilting hook to the interior surface area, preferably in the baggage compartment.

### Brief Description of the Drawings

The invention in its various aspects will now be described with reference to certain drawings thereof, in which:

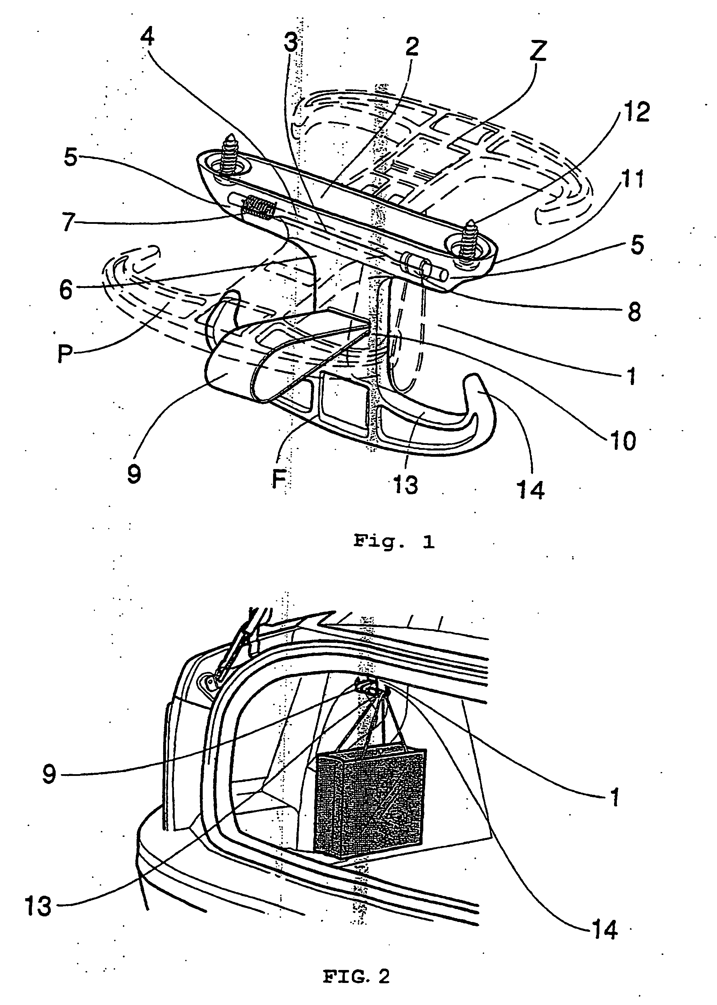

Figure 1 is a perspective transparent view of a tilting hook shown in its vertical functional position and drawn with dashed lines in its front and rear non-functional positions, and
Figure 2 is a view into the baggage compartment of a car from behind showing a tilting double hook fixed to the upper surface of the compartment, which hook is shown in the operating vertical position.

### Detailed Description of the Invention

A tilting hook 1 for hanging up of baggage and shopping bags consists of a base 2 with a central longitudinal recess 3, whereby, a rotatable shaft 4 runs along in said recess 3, which shaft 4 is mounted in the edge parts 5 of the base 2. The rotatable shaft 4 carries the hook body 6 and is provided with a friction brake 8 and a spring 7. The spring 7 is acting continuously on the hook body 6 and tilts the hook body 6 into the resting non-functional position Z. A friction break 8 damps the tilting movement to the encasement of the hook body 6 in the direction to the resting non-functional position Z.

The central longitudinal recess 3 of the base 2 allows tilting of the hook body 6 from the resting non-functional position Z across a vertical functional position F up to a front non-functional position P. Both the functional position F and the non-functional positions Z and P of the hook body 6 are not locked in any way. Tilting of the hook body 6 into the functional position F is carried out by means of a controlling strap 9, which strap 9 is fastened in the central part 10 of the hook body 6.

The base 2 is provided with recesses 11 on external sides of the edge parts 5, which recesses 11 are provided for placing of fixing elements 12 used for securing of the tilting hook 1 to the bottom of an interior surface area of a (not shown vehicle interior, preferably in a baggage compartment.

Also, the tilting hook 1 can be fixed by the base 2 in a vertical or a inclined area, eventually, provided with a protrusion. In the resting non-functional position Z, the tilting hook 1 is then above the fixing of the base 2 and the functional position F is then horizontal or inclined.

After the hook body 6 has been tilted from the resting non-functional position Z into the functional position F by means of a controlling strap 9, the baggage is hung up at least on one slightly bent part 13, provided with a hook nose 14. Weight of the hung up bag keeps the hook body 6 in the functional position F, whereby the slightly bent part 13 with the hook nose 14 prevents undesired movements of the bags and eventual falling of small objects out of the bags. In case of a low weight bag or in case of longer carrying straps, the hook body 6 tends to tilt to the resting non-functional position Z by the continuous pushing action of the spring 7, whereby, the carrying straps are tensed or pushed to the fixing surface. Therefore, spontaneous releasing of the carrying bag straps never takes place.

In case of a rapid and inattentive taking out of the baggage when the carrying straps are not lifted sufficiently, hand of the person who takes the baggage out is led to the fixing surface area, whereby, the base 2 or the hook body 6 are never broken out.

### Industrial Use

The present invention will find uses in baggage compartments, preferably in those of cars.

## Claims

1. A tilting hook (1) for hanging up of baggage and shopping bags in an automobile interior, preferably in a baggage compartment, comprising a base (2) provided with a central longitudinal recess (3), whereby a rotatable shaft (4) runs along in said recess (3), which shaft (4) is mounted in the edge parts (5) of the base (2), which shaft (4) carries the hook body (6) and is provided with a friction brake (8) and a spring (7), **characterized in that** the spring (7) is acting on the hook body (6) in the direction to the resting rear non-functional position (Z) and **in that** said central longitudinal recess (3) of said base (2) is formed such that said hook body (6) is tiltable from said resting rear non-functional position (Z) across a vertical functional position (F) up to a front non-functional position (P).

2. The tiling hook (1) of claim 1 **characterized in that** the hook (1) further comprises a controlling strap (9), which strap (9) is fastened in a central part (10) of said hook body (6) and serves for tilting of said hook body (6) into said vertical position (P), whereby none of said position (F, P, Z) is mechanically locked.

3. The tiling hook (1) of any of claims 1 and 2 **characterized in that** said base (2) is provided with recesses (11) on external sides of said edge parts (5), which recesses (11) are provided for placing of fixing elements (12) for securing of a tilting hook (1) to the interior surface area, preferably in the baggage compartment.

## Patentansprüche

1. Schwenkbarer Haken (1) zum Aufhängen von Gepäck und Einkaufstaschen in einem Kraftfahrzeuginnenraum, vorzugsweise in einem Kofferraum, mit einer Basis (2), die mit einer mittleren Längsausnehmung (3) versehen ist, wobei eine drehbare Welle (4) in der Ausnehmung (3) entlangläuft, die in den Randteilen (5) der Basis (2) montiert ist, einen Hakenkörper (6) trägt und mit einer Reibbremse (8) und einer Feder (7) versehen ist, **dadurch gekennzeichnet, dass** die Feder (7) in Richtung der hinteren Nichtbetriebsruheposition (Z) auf den Hakenkörper (6) wirkt und dass die mittlere Längsausnehmung (3) der Basis (2) so ausgebildet ist, dass der Hakenkörper (6) aus der hinteren, Nichtbetriebsruheposition (Z) über eine vertikale Betriebsposition (F) in eine vordere Nichtbetriebsposition (P) geschwenkt werden kann.

2. Schwenkbarer Haken (1) nach Anspruch 1, **dadurch gekennzeichnet, dass** der Haken (1) ferner einen Steuergurt (9) aufweist, der in einem mittleren Teil (10) des Hakenkörpers (6) befestigt ist und dazu dient, den Hakenkörper (6) in die vertikale Position (P) zu schwenken, wodurch keine der Positionen (F, P, Z) mechanisch verriegelt ist.

3. Schwenkbarer Haken (1) nach Anspruch 1 oder 2, **dadurch gekennzeichnet, dass** die Basis (2) auf Außenseiten der Randteile (5) mit Ausnehmungen (11) versehen ist, die zum Platzieren von Befestigungselementen (12) vorgesehen sind, um einen schwenkbaren Haken (1) am Innenflächenbereich, vorzugsweise im Kofferraum, zu befestigen.

## Revendications

1. Crochet pivotant (1) pour l'accrochage de bagages et de sacs de commissions à l'intérieur d'une automobile, de préférence dans un compartiment à bagages, comprenant une base (2) pourvue d'un retrait central longitudinal (3), une broche rotative (4) s'étendant en longueur dans ledit retrait (3), laquelle broche (4) est montée dans les parties des bords (5) de la base (2), laquelle broche (4) porte le corps du crochet (6) et est pourvue d'un frein à friction (8) et d'un ressort (7), **caractérisé en ce que** le ressort (7) agit sur le corps du crochet (6) dans la direction de la position non fonctionnelle arrière de repos (Z) et **en ce que** ledit retrait central longitudinal (3) de ladite base (2) est formé de telle sorte que ledit corps du crochet (6) puisse pivoter de ladite position non fonctionnelle arrière de repos (Z) en passant par une position fonctionnelle verticale (F) jusqu'à une position non fonctionnelle avant (P).

2. Crochet pivotant (1) selon la revendication 1, **caractérisé en ce que** le crochet (1) comprend en outre une sangle de commande (9), laquelle sangle (9) est attachée dans une partie centrale (10) dudit corps du crochet (6) et sert à faire pivoter ledit corps du crochet (6) dans ladite position verticale (P), aucune desdites positions (F, P, Z) n'étant verrouillée mécaniquement.

3. Crochet pivotant (1) selon l'une quelconque des revendications 1 et 2, **caractérisé en ce que** ladite base (2) est pourvue de retraits (11) sur des côtés extérieurs desdites parties des bords (5), lesquels retraits (11) sont prévus pour placer ou fixer des éléments (12) pour fixer un crochet pivotant (1) sur la surface intérieure, de préférence dans le compartiment à bagages.
